# EUROPEAN PATENT APPLICATION

(11) **EP 4 819 576 A1**
(43) Date of publication of application: **07.10.2026**
(21) Application number: 24906089.8
(22) Date of filing: 04.12.2024
(51) Int. Cl.: H04L 49/9015

(54) **GROUP COMMUNICATION METHOD AND APPARATUS, AND BASE STATION, TERMINAL, GROUP COMMUNICATION SYSTEM AND MEDIUM**

(30) Priority: 22.12.2023 CN 202311774654
(71) Applicant: Hanshow Technology Co., Ltd., Jiaxing, Zhejiang 314031 (CN)
(72) Inventor: LIANG, Min, Jiaxing, Zhejiang 314000 (CN); ZHANG, Ju, Jiaxing, Zhejiang 314000 (CN); CHEN, Gengfeng, Jiaxing, Zhejiang 314000 (CN); JI, Yaping, Jiaxing, Zhejiang 314000 (CN); WANG, Yujing, Jiaxing, Zhejiang 314000 (CN); GAO, Longfei, Jiaxing, Zhejiang 314000 (CN)
(74) Representative: Brunazzi, Stefano
(86) International application number: PCT/CN2024/136600
(87) International publication number: WO 2025/130605

(57) **Abstract**

Provided are a group communication method, a group communication apparatus, a base station, a terminal, a group communication system, and a computer-readable storage medium. The method is performed by a radio frequency sub-board of a base station. The method includes: sending a synchronization frame to a terminal group in a communication period, where the synchronization frame includes indication information indicating whether the communication period is a wake-up packet sending period, the terminal group includes multiple terminals, and the multiple terminals are grouped in a manner of multi-level organization (S110); and sending a to-be-woken terminal multi-level description field and a data payload field to the terminal group in the wake-up packet sending period (S120).

## Description

This application claims priority to Chinese Patent Application No. 202311774654.5 filed with the China National Intellectual Property Administration (CNIPA) on Dec. 22, 2023, the disclosure of which is incorporated herein by reference in its entirety.

### TECHNICAL FIELD

The present application relates to the field of wireless communication technologies, for example, a group communication method, a group communication apparatus, a base station, a terminal, a group communication system, and a computer-readable storage medium.

### BACKGROUND

With the rapid development of battery technology, batch data communication between a base station and multiple terminals is mainly implemented in two manners. In a first manner, the base station wakes up all the terminals at once and then communicates with them sequentially. This manner was widely used in the early stage of battery technology. All the terminal devices are woken up at the same time and communicate one by one. In a second manner, the base station wakes up the terminals sequentially and then communicates with them. This manner is an improvement over the first manner.

Although the first manner enables information transmission, it has problems such as high power consumption, low communication efficiency, and reduced terminal lifespan caused by frequent wake-up operations. While the second manner can reduce the overall power consumption by waking up the terminals sequentially, it still has problems such as relatively low communication efficiency, and relatively long waiting times for a large number of terminals to participate in communication.

### SUMMARY

The present application provides a group communication method, a group communication apparatus, a base station, a terminal, a group communication system, and a computer-readable storage medium, so as to optimize a batch communication mode of a terminal group in the related art and achieve effective balance between power consumption and communication efficiency.

According to one aspect of an embodiment of the present application, a group communication method is provided. The group communication method is performed by a radio frequency sub-board of a base station. The method includes the steps described below.

A synchronization frame is sent to a terminal group in a communication period, where the synchronization frame includes indication information indicating whether the communication period is a wake-up packet sending period, the terminal group includes multiple terminals, and the multiple terminals are grouped in a manner of multi-level organization.

A to-be-woken terminal multi-level description field and a data payload field are sent to the terminal group in the wake-up packet sending period.

The to-be-woken terminal multi-level description field is used for indicating, in a manner of multi-level description, a terminal in the terminal group that needs to be woken up in a current wake-up packet sending period, and the data payload field includes a data packet that needs to be sent to a woken terminal in the current wake-up packet sending period.

According to another aspect of an embodiment of the present application, a group communication method is further provided. The group communication method is performed by a terminal in a terminal group. Multiple terminals in the terminal group are grouped in a manner of multi-level organization. The method includes the steps described below.

A synchronization frame sent by a radio frequency sub-board of a base station is received in a communication period.

In response to identifying the communication period as a wake-up packet sending period according to the synchronization frame, the terminal continues to receive, in the communication period, a to-be-woken terminal multi-level description field sent by the radio frequency sub-board of the base station.

In response to determining, according to the to-be-woken terminal multi-level description field, that the terminal is the to-be-woken terminal in the communication period, the terminal continues to receive, in the communication period, a data payload field sent by the radio frequency sub-board of the base station and extracts a data packet directed to the terminal from the data payload field.

According to another aspect of an embodiment of the present application, a group communication method is further provided. The group communication method is performed by a main control board of a base station. The method includes the steps described below.

Multiple data packets to be sent to multiple terminals in a terminal group are acquired.

The multiple data packets of the multiple terminals are grouped in a manner of multi-level organization of the terminal group, and multiple data packet groups and multiple data packets in each data packet group are sorted in a preset sorting manner.

The multiple data packets are acquired in sequence according to a sorting result, and the multiple data packets of the multiple terminals are filled into multiple linked lists in a manner that multiple data packets belonging to the same terminal are filled in the same linked list, multiple data packets in the same group are arranged adjacent to each other, and the filling lengths of the multiple linked lists are evenly set.

A radio frequency sub-board of the base station fills, in order of acquiring one data packet from each linked list each time, the multiple data packets of the multiple terminals into a data payload field for sending.

According to another aspect of an embodiment of the present application, a group communication apparatus is further provided. The group communication apparatus is configured in a radio frequency sub-board of a base station. The apparatus includes a first-type information sending module and a second-type information sending module.

The first-type information sending module is configured to send a synchronization frame to a terminal group in a communication period, where the synchronization frame includes indication information indicating whether the communication period is a wake-up packet sending period, the terminal group includes multiple terminals, and the multiple terminals are grouped in a manner of multi-level organization.

The second-type information sending module is configured to send a to-be-woken terminal multi-level description field and a data payload field to the terminal group in the wake-up packet sending period.

The to-be-woken terminal multi-level description field is used for indicating, in a manner of multi-level description, a terminal in the terminal group that needs to be woken up in a current wake-up packet sending period, and the data payload field includes a data packet that needs to be sent to a woken terminal in the current wake-up packet sending period.

According to another aspect of an embodiment of the present application, a group communication apparatus is further provided. The group communication apparatus is configured in a terminal in a terminal group. Multiple terminals in the terminal group are grouped in a manner of multi-level organization. The apparatus includes a synchronization frame receiving module, a multi-level description field receiving module, and a data payload field receiving module.

The synchronization frame receiving module is configured to receive, in a communication period, a synchronization frame sent by a radio frequency sub-board of a base station.

The multi-level description field receiving module is configured to, in response to identifying the communication period as a wake-up packet sending period according to the synchronization frame, continue to receive, in the communication period, a to-be-woken terminal multi-level description field sent by the radio frequency sub-board of the base station.

The data payload field receiving module is configured to, in response to determining, according to the to-be-woken terminal multi-level description field, that the terminal is the to-be-woken terminal in the communication period, continue to receive, in the communication period, a data payload field sent by the radio frequency sub-board of the base station and extract a data packet directed to the terminal from the data payload field.

According to another aspect of an embodiment of the present application, a group communication apparatus is further provided. The group communication apparatus is configured in a main control board of a base station. The apparatus includes a data packet acquisition module, a data packet sorting module, and a linked list filling module.

The data packet acquisition module is configured to acquire multiple data packets to be sent to multiple terminals in a terminal group.

The data packet sorting module is configured to group the multiple data packets of the multiple terminals in a manner of multi-level organization of the terminal group and sort multiple data packet groups and multiple data packets in each data packet group in a preset sorting manner.

The linked list filling module is configured to acquire the multiple data packets in sequence according to a sorting result and fill the multiple data packets of the multiple terminals into multiple linked lists in a manner that multiple data packets belonging to the same terminal are filled in the same linked list, multiple data packets in the same group are arranged adjacent to each other, and the filling lengths of the multiple linked lists are evenly set.

A radio frequency sub-board of the base station fills, in order of acquiring one data packet from each linked list each time, the multiple data packets of the multiple terminals into a data payload field for sending.

According to another aspect of an embodiment of the present application, a base station is further provided. The base station includes a main control board of the base station and at least one radio frequency sub-board of the base station.

The at least one radio frequency sub-board of the base station is configured to implement the group communication method performed by the radio frequency sub-board of the base station according to any embodiment of the present application.

The main control board of the base station is configured to implement the group communication method performed by the main control board of the base station according to any embodiment of the present application.

According to another aspect of an embodiment of the present application, a terminal is further provided.

The terminal includes at least one processor and a memory.

The memory is communicatively connected to the at least one processor.

The memory stores a computer program executable by the at least one processor, and the computer program is executed by the at least one processor, so as to enable the at least one processor to perform the group communication method performed by the terminal according to any embodiment of the present application.

According to another aspect of an embodiment of the present application, a group communication system is further provided. The group communication system includes the base station according to any embodiment of the present application and a terminal group obtained by grouping multiple terminals according to any embodiment of the present application in a manner of multi-level organization.

According to another aspect of an embodiment of the present application, a computer-readable storage medium is further provided. The computer-readable storage medium stores a computer instruction, where the computer instruction is configured to cause a processor to implement the group communication method according to any embodiment of the present application.

### BRIEF DESCRIPTION OF DRAWINGS

FIG. 1 is a flowchart of a group communication method according to embodiment one of the present application.
FIG. 2 is a schematic diagram of a communication frame structure of various types of radio frequency sub-boards of a base station in one communication period, where embodiments of the present application are applicable to the various types of radio frequency sub-boards of the base station.
FIG. 3 is a flowchart of a group communication method according to embodiment two of the present application.
FIG. 4 is a flowchart of a group communication method according to embodiment three of the present application.
FIG. 5 is a schematic diagram showing that the terminal to which an embodiment of the present application is applicable performs different execution actions in different time intervals in a communication period.
FIG. 6 is a flowchart of a group communication method according to embodiment four of the present application.
FIG. 7 is a schematic diagram showing a linked list structure for packet organization and a packet sending effect of a main control board of a base station to which an embodiment of the present application is applicable.
FIG. 8 is a schematic diagram showing that data packets of multiple terminals in a data payload field are sent alternately, where an embodiment of the present application is applicable to the data load field.
FIG. 9 is a structural diagram of a group communication apparatus according to embodiment five of the present application.
FIG. 10 is a structural diagram of a group communication apparatus according to embodiment six of the present application.
FIG. 11 is a structural diagram of a group communication apparatus according to embodiment seven of the present application.
FIG. 12 is a structural diagram of a base station according to embodiment eight of the present application.
FIG. 13 is a structural diagram of a terminal according to embodiment nine of the present application.
FIG. 14 is a structural diagram of a group communication system according to embodiment ten of the present application.

### DETAILED DESCRIPTION

Terms such as "first" and "second" in the description, claims, and drawings of the present application are used to distinguish between similar objects and are not necessarily used to describe a particular order or sequence. It is to be understood that data used in this way is interchangeable when appropriate so that embodiments of the present application described herein can be implemented in a sequence not illustrated or described herein. In addition, the terms "including" and "having" and any variations thereof are intended to encompass a non-exclusive inclusion. For example, a process, method, system, product, or device that includes a series of steps or units not only includes the expressly listed steps or units but may also include other steps or units that are not expressly listed or are inherent to such a process, method, system, product, or device.

### Embodiment one

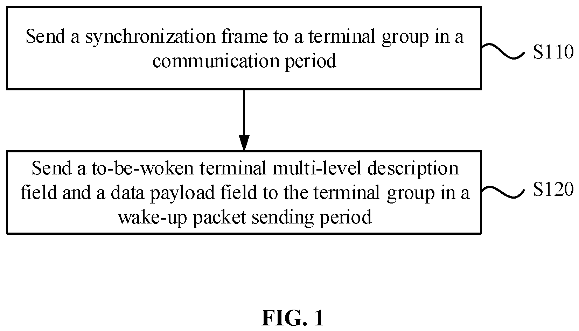

FIG. 1 is a flowchart of a group communication method according to embodiment one of the present application. This embodiment is applicable to the scenario where a radio frequency sub-board of a base station communicates with multiple terminals in a terminal group in batches. The method may be performed by a group communication apparatus. The group communication apparatus may be implemented in the form of hardware and/or software. The apparatus may be configured in at least one radio frequency sub-board of the base station. As shown in FIG. 1, the method includes the steps described below.

In S110, a synchronization frame is sent to the terminal group in a communication period.

The synchronization frame includes indication information indicating whether the communication period is a wake-up packet sending period. The terminal group includes the multiple terminals, and the multiple terminals are grouped in a manner of multi-level organization.

The communication period may be understood as a repetition period in which the radio frequency sub-board of the base station sends a communication frame. The communication period may be preset according to an actual situation, for example, 1s, 2s, or 5s. In addition to synchronization information for implementing frame synchronization of the terminal group, the synchronization frame further includes the indication information indicating whether the communication period in which the synchronization frame is located is the wake-up packet sending period. Optionally, the wake-up packet sending period may be understood as a communication period in which the radio frequency sub-board of the base station sends wake-up packet information. If the synchronization frame indicates that the communication period in which the synchronization frame is located is the wake-up packet sending period, the radio frequency sub-board of the base station sends the corresponding wake-up packet information in the communication period. In this case, each terminal in the terminal group needs to monitor the information accordingly to determine whether the terminal needs to be woken up in the communication period. If the synchronization frame indicates that the communication period in which the synchronization frame is located is not the wake-up packet sending period, the radio frequency sub-board of the base station does not send the wake-up packet information in the communication period. In this case, each terminal in the terminal group may continue sleeping until the start of the next frame-listening period.

Generally speaking, one frame-listening period is greater than one communication period and is an integer multiple of the communication period. For example, assuming that the communication period is 1s, the frame-listening period may be 16s. When a terminal does not detect indication information of a wake-up packet sending period in a synchronization frame of a communication period, the terminal may choose to sleep for 16s before receiving a synchronization frame of a new communication period.

The group communication method described in the embodiment of the present application is mainly applicable to batch communication between the base station and the terminal group. Optionally, the terminal group includes the multiple terminals, and the multiple terminals are grouped in the manner of multi-level organization. In some embodiments, each terminal in the terminal group may be a device with low power consumption, for example, an electronic price tag.

A two-level organization is used as an example. In this organizational structure, the terminal group includes multiple large groups, each large group includes multiple small groups, and each small group includes multiple terminals. It is to be understood that the terminal group may also be organized into three levels or four levels. The actual organizational form may be determined by the total number of terminals included in the terminal group.

In S120, a to-be-woken terminal multi-level description field and a data payload field are sent to the terminal group in the wake-up packet sending period.

The to-be-woken terminal multi-level description field is used for indicating, in a manner of multi-level description, a terminal in the terminal group that needs to be woken up in a current wake-up packet sending period. The data payload field includes a data packet that needs to be sent, in the current wake-up packet sending period, to a woken terminal.

In this embodiment, if a communication period is a wake-up packet sending period, the radio frequency sub-board of the base station needs to send the wake-up packet information to the terminal group in the communication period, that is, the to-be-woken terminal multi-level description field and the data payload field.

The to-be-woken terminal multi-level description field is used for indicating which terminal (hereinafter referred to a to-be-woken terminal) in the terminal group needs to be woken up in the wake-up packet sending period. The meaning of the multi-level description field may be understood as prompting each to-be-woken terminal in a multi-level prompting manner. For example, if the terminal group is in the form of a two-level organization, the large group where the to-be-woken terminal is located may be prompted, and the small group where the to-be-woken terminal is located and the specific to-be-woken terminal in the small group may then be prompted. Such a prompting manner can enable terminals that do not need to be woken up to determine the states thereof as early as possible and then enter a sleep state as early as possible, so as to minimize power consumption and improve wake-up efficiency.

The data payload field includes a data packet that needs to be sent to each to-be-woken terminal in the current wake-up packet sending period, and each data packet includes information of the to-be-woken terminal to which the data packet is directed. It is to be understood that after a terminal determines, according to the to-be-woken terminal multi-level description field, that the terminal needs to be woken up in the current wake-up packet sending period, the terminal may continue to monitor each data packet in the data payload field sent in the current wake-up packet sending period and extract a data packet directed to the terminal from the data payload field.

Optionally, the operation of sending the synchronization frame to the terminal group in S110 and the operation of sending the to-be-woken terminal multi-level description field and the data payload field to the terminal group in S120 may be performed by only a single radio frequency sub-board of the base station or may be cooperatively performed by multiple radio frequency sub-boards of the base station to improve the data sending efficiency of the base station.

Correspondingly, when the method is cooperatively performed by the multiple radio frequency sub-boards of the base station, the step in which the synchronization frame is sent to the terminal group in the communication period may include the step described below.

The synchronization frame is sent to the terminal group through a first-type radio frequency sub-board of the base station in the communication period.

In addition, the step in which the to-be-woken terminal multi-level description field and the data payload field are sent to the terminal group in the wake-up packet sending period may include the step described below.

The to-be-woken terminal multi-level description field and the data payload field are sent to the terminal group through a second-type radio frequency sub-board of the base station in the wake-up packet sending period.

In this optional implementation, the radio frequency sub-boards of the base station included in the base station may be divided into two types, namely the first-type radio frequency sub-board of the base station and the second-type radio frequency sub-board of the base station. The preceding two types of radio frequency sub-boards of the base station may have identical structures and may differ from each other only in contents of communication frames sent to the terminal group in each communication period. One first-type radio frequency sub-board of the base station is typically provided, and one or more second-type radio frequency sub-boards of the base station may be provided. The specific number of second-type radio frequency sub-boards of the base station may be customized according to an actual group scenario.

Correspondingly, in the communication period in S110, the first-type radio frequency sub-board of the base station and the second-type radio frequency sub-board of the base station send the communication frames at different time points, and the contents of the communication frames are different.

Optionally, the first-type radio frequency sub-board of the base station sends the synchronization frame to the terminal group in each communication period. A sending time interval of the synchronization frame is in a front portion of the communication period in which the synchronization frame is located. For example, the sending time interval of the synchronization frame is in the first 5 ms or the first 1 ms. In the time interval when the first-type radio frequency sub-board of the base station sends the synchronization frame, the second-type radio frequency sub-board of the base station may be in an idle state and may not send any data.

In some embodiments, the first-type radio frequency sub-board of the base station only sends the synchronization frame and generally sends the synchronization frame in a very short period of time in the communication period. Therefore, the first-type radio frequency sub-board of the base station may receive, in the remaining time of the communication period, a heartbeat packet and uplink data sent by the terminal group.

The terminal group in the form of a two-level organization is still used as an example. In an optional implementation of this embodiment, the to-be-woken terminal multi-level description field includes a to-be-woken large group description field and a to-be-woken small group to-be-woken terminal description field.

The to-be-woken large group description field may be used for indicating which large group in the terminal group has a terminal that needs to be woken up in the wake-up packet sending period (that is, the to-be-woken large group). Furthermore, a terminal that does not belong to the preceding to-be-woken large group may enter the sleep state as early as possible. Optionally, the to-be-woken large group description field may include a group number set of the to-be-woken large group, and the preceding group number set of the large group may be in the form of a bitmap.

The to-be-woken small group to-be-woken terminal description field may be used for indicating which terminals in small groups of the preceding to-be-woken large group need to be woken up in the wake-up packet sending period. Optionally, the to-be-woken small group to-be-woken terminal description field may specifically include a group number set of the wake-up small group and a terminal identifier set of each to-be-woken terminal in each wake-up small group (for example, the terminal identifier set may be an intra-group identifier bit). The group number set and the terminal identifier set mentioned above may also be in the form of a bitmap. Alternatively, the to-be-woken small group to-be-woken terminal description field may directly include an identification result indicating whether each terminal in each small group in each large group is the to-be-woken terminal. In this embodiment, a data form of the description field of the to-be-woken terminal in the small group may be configured according to the actual situation.

On the basis of the preceding embodiments, it is assumed that although a to-be-woken terminal A needs to be woken up in a communication period, the data packet corresponding to the to-be-woken terminal A in the data payload field appears at a very late time position in the communication period. In this case, the to-be-woken terminal A needs to idly wait for a very long time after being woken up, which causes a certain power consumption loss. This type of power consumption loss is particularly significant when the terminal group has a large number of terminals. Based on this, the present application proposes that the entire communication period is divided into multiple communication period intervals, and one data payload field is correspondingly sent in one communication period interval. With the preceding configuration, a to-be-woken terminal does not need to be woken up throughout the entire communication period, but only needs to be woken up in the communication period interval in which the data packet needs to be received so that wake-up power consumption is reduced.

Correspondingly, in another optional implementation of this embodiment, the to-be-woken small group to-be-woken terminal description field may include:
a complete to-be-woken small group to-be-woken terminal description field corresponding to the complete communication period, and interval to-be-woken small group to-be-woken terminal description fields that correspond to the multiple communication period intervals, respectively.

The number of data payload fields matches the number of the communication period intervals, and an interval to-be-woken small group to-be-woken terminal description field and a data payload field are separately included in each communication period interval.

In this optional implementation, the complete to-be-woken small group to-be-woken terminal description field is used for describing which terminals in small groups need to be woken up in the complete communication period. The interval to-be-woken small group to-be-woken terminal description field is used for describing which terminals in small groups need to be woken up in one communication period interval in the communication period so that corresponding data packets are extracted from the data payload field in the communication period interval.

In this embodiment, the number of communication period intervals included in one communication period may be preset according to the duration of the communication period and the number of data packets that need to be sent in one communication period, for example, the number of communication period intervals included in one communication period may be 2, 3, or 4. In addition, the time span of each communication period interval may be the same or different and may be preset according to a specific communication scenario.

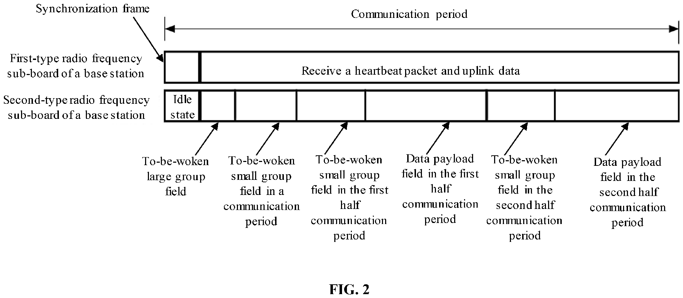

As an example, the multiple radio frequency sub-boards of the base station cooperatively perform the methods in the embodiments of the present application. FIG. 2 is a schematic diagram of a communication frame structure of various types of radio frequency sub-boards of the base station in one communication period, where the embodiments of the present application are applicable to the various types of radio frequency sub-boards of the base station. As shown in FIG. 2, assuming that each communication period is 1s and the duration of the synchronization frame is 10 ms, the first-type radio frequency sub-board of the base station transmits the synchronization frame in the first 10 ms of each second and continuously receives, in the remaining 990 ms, heartbeat packets and various uplink data sent by a terminal cluster. At the same time, the second-type radio frequency sub-board of the base station may remain idle for the first 10 ms of each second and send the to-be-woken terminal multi-level description field and the data payload field in the remaining 990 ms.

In the example in FIG. 2, the communication period is divided into two communication period intervals, that is, the first half communication period and the second half communication period. Furthermore, a data payload field for the first half communication period and a data payload field for the second half communication period need to be sent in this communication period separately. Optionally, the second-type radio frequency sub-board of the base station may first send a wake-up field (that is, the to-be-woken large group description field) of the large group within a 5-ms duration after the idle state ends. Then, the second-type radio frequency sub-board of the base station may send a wake-up field (that is, the complete to-be-woken small group to-be-woken terminal description field) of the small group within a 25-ms duration inside the communication period. Subsequently, the second-type radio frequency sub-board of the base station may send a wake-up field (that is, an interval to-be-woken small group to-be-woken terminal description field) of a small group within a 25-ms duration inside the first half communication period. Afterwards, the second-type radio frequency sub-board of the base station may continue to send a data payload field within a 455-ms duration inside the first half communication period with so that terminals that are woken up in the first half communication period receive data packets. Then, the second-type radio frequency sub-board of the base station may continuously send a wake-up field of a small group within a 25-ms duration inside the second half communication period and a data payload field within a 455-ms duration inside the second half communication period so that terminals that are woken up in the second half communication period receive data packets.

In the embodiments of the present application, the radio frequency sub-board of the base station may separately send the synchronization frame, the to-be-woken terminal multi-level description field, and the data payload field to the terminal group in the communication period identified as the wake-up packet sending period so that each terminal in the terminal group receives the data packet directed to the terminal in the data payload field only when identifying, in a multi-level manner, the terminal as the to-be-woken terminal in the communication period according to the to-be-woken terminal multi-level description field. This multi-level wake-up manner significantly reduces the wake-up power consumption and improves the wake-up efficiency. Each terminal may enter the sleep state in time after communication is completed. The preceding implementation manner achieves a particularly significant energy-saving effect in a large-scale group communication scenario.

In an optional implementation of this embodiment, the description field of the to-be-woken terminal in the interval wake-up small group and the data payload field separately corresponding to the same communication period interval are sent by the same radio frequency sub-board of the base station, and the interval to-be-woken small group to-be-woken terminal description fields and the data payload fields respectively corresponding to different communication period intervals are sent by different radio frequency sub-boards of the base station.

Optionally, in the example shown in FIG. 2, the wake-up field of the small group in the first half communication period and the data payload field in the first half communication period adjacent to the wake-up field of the small group need to be sent by the same radio frequency sub-board of the base station.

In some embodiments, it is assumed that the wake-up field of the small group in the first half communication period and the data payload field in the first half communication period adjacent to the wake-up field of the small group constitute field group 1, and the wake-up field of the small group in the second half communication period and the data payload field in the second half communication period adjacent to the wake-up field of the small group constitute field group 2. Furthermore, field group 1 and field group 2 mentioned above may be sent by the same second-type radio frequency sub-board of the base station, or field group 1 and field group 2 mentioned above may be sent by two different second-type radio frequency sub-boards of the base station.

For example, field group 1 may be sent by a second-type radio frequency sub-board 1 of the base station, and field group 2 may be sent by a second-type radio frequency sub-board 2 of the base station. With this configuration, the capabilities of each second-type radio frequency sub-board of the base station can be fully utilized, and the data sending efficiency is ensured.

In another optional implementation of this embodiment, all to-be-woken terminal multi-level description fields and data payload fields in each communication period may be sent by the same second-type radio frequency sub-board of the base station, while to-be-woken terminal multi-level description fields and data payload fields in an adjacent communication period may be sent by different second-type radio frequency sub-boards of the base station so that the capabilities of each second-type radio frequency sub-board of the base station are fully utilized. For example, 1s corresponds to one communication period. To-be-woken terminal multi-level description fields and data payload fields included in the first second are sent by the second-type radio frequency sub-board 1 of the base station, to-be-woken terminal multi-level description fields and data payload fields included in the second second are sent by the second-type radio frequency sub-board 2 of the base station, and so on.

The embodiments of the present application mainly use the terminal group in the form of a two-level organization as an example to describe the specific content of the to-be-woken terminal multi-level description field. In fact, when the terminal group is in the form of a three-level organization or in the form of a four-level organization, a specific form of the to-be-woken terminal multi-level description field may be obtained through simple deduction.

Optionally, when the terminal group is a three-level organization, the to-be-woken terminal multi-level description field may accordingly include the to-be-woken large group description field, a first-level to-be-woken small group to-be-woken terminal description field, and a second-level to-be-woken small group to-be-woken terminal description field.

The to-be-woken large group description field may also be used for indicating which large groups in the terminal group have terminals that need to be woken up in the wake-up packet sending period. The first-level to-be-woken small group to-be-woken terminal description field may be used for indicating which first-level small groups in the preceding to-be-woken large groups have terminals that need to be woken up in the wake-up packet sending period. The second-level to-be-woken small group to-be-woken terminal description field may be used for indicating which terminals in second-level small groups in the preceding first-level small groups need to be woken up in the wake-up packet sending period.

Similarly, when the terminal group is a four-level organization, the to-be-woken terminal multi-level description field may accordingly include the to-be-woken large group description field, a first-level to-be-woken small group to-be-woken terminal description field, a second-level to-be-woken small group to-be-woken terminal description field, and a third-level to-be-woken small group to-be-woken terminal description field. The details are not repeated here.

### Embodiment two

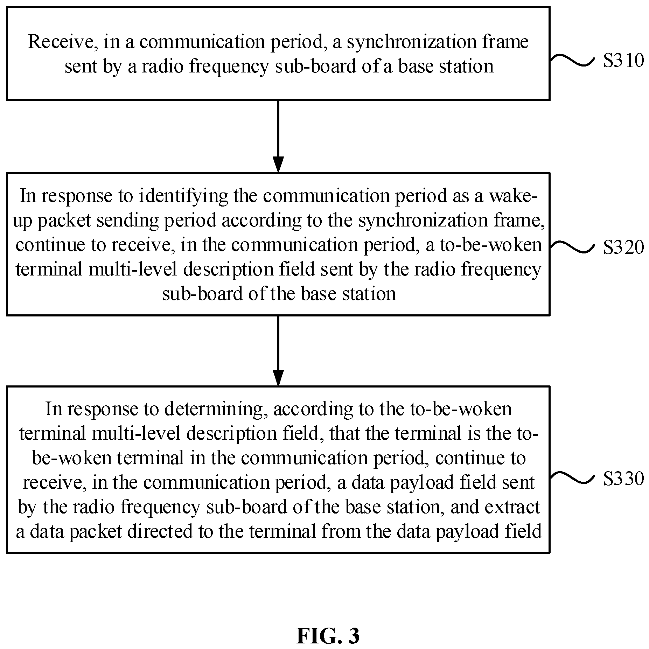

FIG. 3 is a flowchart of a group communication method according to embodiment two of the present application. This embodiment is applicable to the scenario where a radio frequency sub-board of a base station communicates with multiple terminals in a terminal group in batches. The method may be performed by a group communication apparatus. The group communication apparatus may be implemented in the form of hardware and/or software. The apparatus may be configured in each terminal in the terminal group. Optionally, the multiple terminals in the terminal group are grouped in a manner of multi-level organization. As shown in FIG. 3, the method includes the steps described below.

In S310, a synchronization frame sent by the radio frequency sub-board of the base station is received in a communication period.

Optionally, the terminal receives, in each communication period, the synchronization frame sent by the radio frequency sub-board of the base station. The synchronization frame includes indication information indicating whether the communication period is a wake-up packet sending period. Furthermore, after receiving the synchronization frame, each terminal in the terminal group needs to first identify, according to the indication information, whether the communication period when the synchronization frame is currently sent is the wake-up packet sending period.

If the communication period is the wake-up packet sending period, the terminal needs to continue to receive, in the communication period, wake-up packet information sent by the radio frequency sub-board of the base station. If the communication period is not the wake-up packet sending period, the terminal does not need to receive any data in the current communication period and may continue sleeping until the start of the next frame-listening period.

In S320, in response to identifying the communication period as the wake-up packet sending period according to the synchronization frame, the terminal continues to receive, in the communication period, a to-be-woken terminal multi-level description field sent by the radio frequency sub-board of the base station.

As mentioned above, the to-be-woken terminal multi-level description field may be understood as a field that indicates, in a multi-level prompting manner, which terminals in the terminal group need to be woken up in the wake-up packet sending period. In the preceding multi-level prompting manner, the terminal may determine, according to a prompt at a certain level, that the terminal does not need to be woken up in the current communication period and directly enters a sleep state until entering the next communication period. Alternatively, the terminal may determine, after multi-level prompts, that the terminal needs to be woken up in the current communication period and then needs to be woken up at a specific time point and receive the corresponding data packet.

In S330, in response to determining, according to the to-be-woken terminal multi-level description field, that the terminal is the to-be-woken terminal in the communication period, the terminal continues to receive, in the communication period, a data payload field sent by the radio frequency sub-board of the base station and extracts a data packet directed to the terminal from the data payload field.

In some embodiments, when determining that the terminal is the to-be-woken terminal in the communication period, the terminal needs to continue to monitor, in the communication period, the data payload field sent by the radio frequency sub-board of the base station and extract the data packet directed to the terminal from the data payload field.

Each terminal in the terminal group in the embodiment of the present application receives the data packet directed to the terminal in the data payload field only when identifying, in a multi-level manner, the terminal as the to-be-woken terminal in the communication period according to the to-be-woken terminal multi-level description field sent by the radio frequency sub-board of the base station. This multi-level wake-up manner significantly reduces wake-up power consumption and improves wake-up efficiency. Each terminal may enter the sleep state in time after communication is completed. The preceding implementation manner achieves a particularly significant energy-saving effect in a large-scale group communication scenario.

Based on the preceding embodiments, when the to-be-woken terminal multi-level description field includes a to-be-woken large group description field and a to-be-woken small group to-be-woken terminal description field, the step in which in response to determining, according to the to-be-woken terminal multi-level description field, that the terminal is the to-be-woken terminal in the communication period, the terminal continues to receive, in the communication period, the data payload field sent by the radio frequency sub-board of the base station may include the steps described below.

When the to-be-woken large group description field in the to-be-woken terminal multi-level description field is received, in response to determining that the to-be-woken large group description field includes an identifier of the large group to which the terminal belongs, the terminal continues to receive the to-be-woken small group to-be-woken terminal description field in the to-be-woken terminal multi-level description field.

In response to determining that the to-be-woken small group to-be-woken terminal description field includes an identifier of the small group to which the terminal belongs and an identifier of the terminal corresponding to the identifier of the small group to which the terminal belongs, the terminal continues to receive, in the communication period, the data payload field sent by the radio frequency sub-board of the base station.

In this optional embodiment, the terminal group in the form of a two-level organization is used as an example. The radio frequency sub-board of the base station may first prompt, through the to-be-woken large group description field, the large group in which the to-be-woken terminal is located. Then, the radio frequency sub-board of the base station may prompt, through the to-be-woken small group to-be-woken terminal description field, the small group in which the to-be-woken terminal is located and the specific terminal in the small group. Such a prompting manner can enable terminals that do not need to be woken up to determine the states thereof as early as possible and then enter the sleep state as early as possible, so as to minimize the power consumption and improve the wake-up efficiency.

### Embodiment three

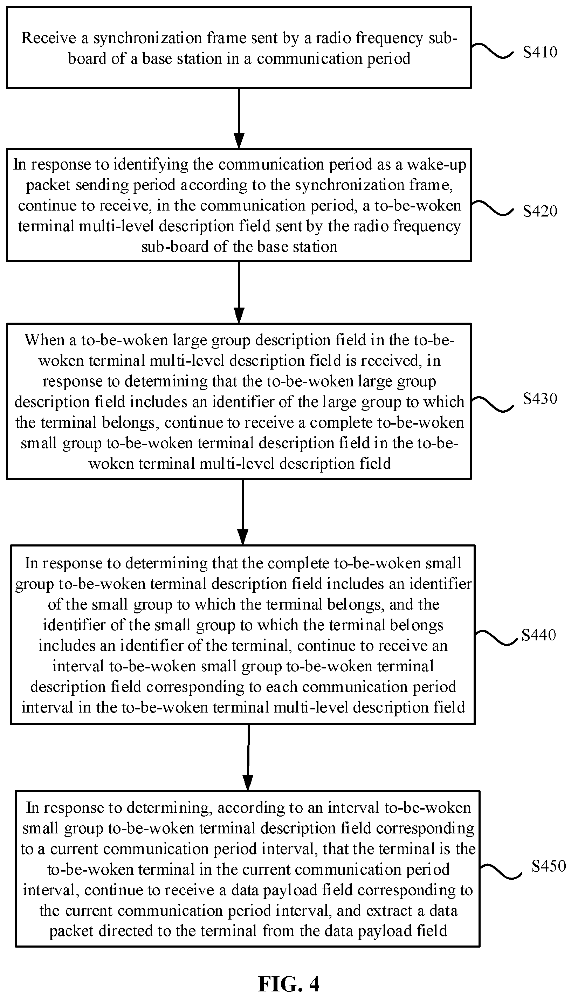

FIG. 4 is another flowchart of a group communication method according to embodiment three of the present application. This embodiment provides further details based on the preceding embodiments. Specifically, when the to-be-woken small group to-be-woken terminal description field includes: the complete to-be-woken small group to-be-woken terminal description field corresponding to the complete communication period, and the interval to-be-woken small group to-be-woken terminal description fields that correspond to the multiple communication period intervals, respectively, this embodiment provides a detailed description of the process where the terminal is woken up in the communication period.

Correspondingly, as shown in FIG. 4, the method includes the steps described below.

In S410, the synchronization frame sent by the radio frequency sub-board of the base station is received in the communication period.

In S420, in response to identifying the communication period as the wake-up packet sending period according to the synchronization frame, the terminal continues to receive, in the communication period, the to-be-woken terminal multi-level description field sent by the radio frequency sub-board of the base station.

In S430, when the to-be-woken large group description field in the to-be-woken terminal multi-level description field is received, in response to determining that the to-be-woken large group description field includes the identifier of the large group to which the terminal belongs, the terminal continues to receive the complete to-be-woken small group to-be-woken terminal description field in the to-be-woken terminal multi-level description field.

In this embodiment, if it is determined that the to-be-woken large group description field does not include the identifier of the large group to which the terminal belongs, it is determined that the terminal does not need to be woken up in the current communication period. Furthermore, the terminal may choose to sleep until the start of the next communication period.

In S440, in response to determining that the complete to-be-woken small group to-be-woken terminal description field includes the identifier of the small group to which the terminal belongs and the identifier of the terminal corresponding to the identifier of the small group to which the terminal belongs, the terminal continues to receive an interval to-be-woken small group to-be-woken terminal description field corresponding to each communication period interval in the to-be-woken terminal multi-level description field.

In this embodiment, if it is determined that the complete to-be-woken small group to-be-woken terminal description field does not include the identifier of the small group to which the terminal belongs or the identifier of the terminal corresponding to the identifier of the small group to which the terminal belongs, it is determined that the terminal does not need to be woken up in the current communication period. Furthermore, the terminal may choose to sleep until the start of the next communication period.

In S450, in response to determining, according to an interval to-be-woken small group to-be-woken terminal description field corresponding to a current communication period interval, that the terminal is the to-be-woken terminal in the current communication period interval, the terminal continues to receive a data payload field corresponding to the current communication period interval and extracts the data packet directed to the terminal from the data payload field.

If it is determined that the terminal is the to-be-woken terminal in the communication period, the terminal needs to detect, upon arrival of the to-be-woken small group to-be-woken terminal description field in each communication period interval included in the communication period, whether the terminal is the to-be-woken terminal in the communication period interval once. If the terminal is the to-be-woken terminal in the communication period interval, the terminal continues to receive the data payload field corresponding to the current communication period interval. If the terminal is not the to-be-woken terminal in the communication period interval, the terminal continues detecting, upon arrival of an interval to-be-woken small group to-be-woken terminal description field in the next communication period interval, whether the terminal is a to-be-woken terminal in the communication period interval until an interval to-be-woken small group to-be-woken terminal description field corresponding to the last communication period interval.

If the terminal determines that the terminal is not the to-be-woken terminal in the last communication period interval, the terminal may choose to sleep until the start of the next frame-listening period.

In this embodiment, after extracting the data packet directed to the terminal from the data payload field, the terminal may perform a corresponding processing action according to the specific type of the data packet. For example, if the data packet is a query data packet, the terminal needs to transmit response information (an acknowledge character (ACK)) matching the query data packet to the radio frequency sub-board of the base station in a point-to-point manner. If the data packet is a sleep packet, the terminal may directly choose to sleep until the start of the next communication period when the current wake-up interval is the last communication period interval, or the terminal may choose to sleep until the arrival of the description field of the to-be-woken terminal in the interval wake-up small group in the next communication period interval when the current wake-up interval is not the last communication period interval.

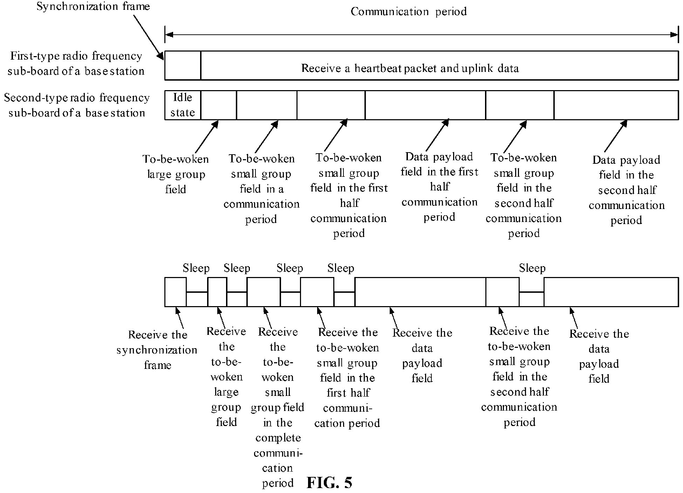

FIG. 5 is a schematic diagram showing that the terminal to which the embodiment of the present application is applicable performs different execution actions in different time intervals in the communication period. FIG. 5 is mainly the schematic diagram of the communication frame structure of the radio frequency sub-boards of the base station shown in FIG. 2 in one communication period, where the execution actions of the terminal based on the communication frame structure are correspondingly described.

Optionally, as shown in FIG. 5, the terminal has a certain sleep duration before receiving each field. With the preceding configuration, the power consumption of each terminal in the terminal group can be further reduced.

In the embodiment of the present application, the radio frequency sub-board of the base station communicates with each terminal in the terminal group based on the preset communication frame structure in the communication period so that multiple designated terminals in the terminal group can be quickly woken up at one time for data communication. In addition, the other terminals in the same terminal group that do not have data services can remain in a low power consumption state. This solution is particularly applicable to various devices with low power consumption and can optimize a terminal group wake-up manner in the related art, thereby achieving effective balance between the power consumption and communication efficiency.

### Embodiment four

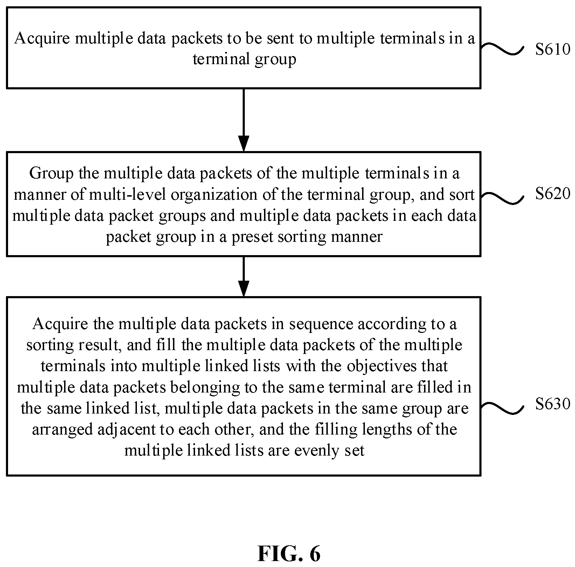

FIG. 6 is a flowchart of a group communication method according to embodiment four of the present application. This embodiment is applicable to the scenario where before a radio frequency sub-board of a base station communicates with multiple terminals in a terminal group in batches, a main control board of the base station efficiently organizes multiple data packets to be sent so that a data payload field is obtained. The method may be performed by a group communication apparatus. The group communication apparatus may be implemented in the form of hardware and/or software. The apparatus may be configured in the main control board of the base station. As shown in FIG. 6, the method includes the steps described below.

In S610, the multiple data packets to be sent to the multiple terminals in the terminal group are acquired.

In this embodiment, the main control board of the base station first collects the multiple data packets that need to be sent to the multiple terminals in the terminal group. Afterwards, the main control board of the base station needs to package and organize the multiple data packets of the preceding multiple terminals so that the radio frequency sub-board of the base station effectively constructs, according to packaging and organization results, data payload fields and sends the data payload fields in different communication periods.

In this embodiment, when packaging and organizing the multiple data packets, the main control board of the base station mainly considers the following adaptive factors: different air interface rates correspond to different durations for sending one data packet; the number of data packets sent to each terminal is different; the processing time required by each terminal after receiving one data packet is different; and the number of terminals in each small group that need to transmit data is different. In addition, as shown in FIG. 2, in a set time slot for sending a data payload field, a second-type radio frequency sub-board of the base station not only needs to send the multiple data packets via a downlink, but also needs to receive an uplink ACK fed back from the terminal. In addition, both a wake-up field of a small group in the first half communication period and a wake-up field of a small group in the second half communication period are subject to preset duration limits. Based on the preceding adaptive factors, the following packaging and organization algorithm for multiple data packets is proposed.

In S620, the multiple data packets of the multiple terminals are grouped in a manner of multi-level organization of the terminal group, and multiple data packet groups and multiple data packets in each data packet group are sorted in a preset sorting manner.

In an optional implementation of this embodiment, the step in which the multiple data packets of the multiple terminals are grouped in the manner of multi-level organization of the terminal group, and the multiple data packet groups and the multiple data packets in each data packet group are sorted in the preset sorting manner may include the steps described below.

A data packet group corresponding to each small group is generated according to small groups to which terminals directed to by the multiple data packets of the multiple terminals belong. Multiple data packets corresponding to the same terminal in each data packet group are collected into the same terminal data packet set. The first sorting is performed on the multiple data packet groups in descending order of the number of data packets included by each of the multiple data packet groups, and the second sorting is performed on multiple terminal data packet sets in each data packet group in descending order of the number of data packets in each of the multiple terminal data packet sets.

In this optional implementation, first, multiple data packets belonging to the same data packet group are clustered, and in each data packet group, the data packets belonging to the same terminal are collected into the same terminal data packet set. Furthermore, a grouping result may be obtained in the form: group 1 {the data packet set of terminal 1, the data packet set of terminal 2, ...}, group 2 {the data packet set of terminal 1, the data packet set of terminal 2, ...}.

Afterwards, the number of data packets included in each data packet group may be counted separately, and the first sorting is performed on the multiple data packet groups. After the first sorting is completed, the data volume of the data packets (which may also be understood as the data volume) included in the data packet group ranked earlier is larger. In addition, the second sorting is performed on the multiple terminal data packet sets in each data packet group in descending order of the numbers of data packets. After the second sorting is completed, the data volume of the data packets (which may also be understood as the data volume) included in the terminal data packet set ranked earlier in the same data packet group is larger.

In S630, the multiple data packets are acquired in sequence according to a sorting result, and the multiple data packets of the multiple terminals are filled into multiple linked lists in a manner that multiple data packets belonging to the same terminal are filled in the same linked list, multiple data packets in the same group are arranged adjacent to each other, and the filling lengths of the multiple linked lists are evenly set.

The radio frequency sub-board of the base station fills, in order of acquiring one data packet from each linked list each time, the multiple data packets of the multiple terminals into the data payload field for sending.

The reason for filling the multiple data packets belonging to the same terminal into the same linked list is to avoid sending multiple adjacent data packets in the data payload field to the same terminal. The reason for doing this is that each terminal needs a certain amount of time to process the data packet after receiving the data packet. If multiple data packets are continuously sent to the same terminal in a short period of time, sending congestion may occur, and the data packets may wait to be sent, which may reduce the efficiency of an air interface and communication efficiency to a certain extent. The embodiments of the present application propose a data packet organization form with multiple linked lists filled. During subsequent organization of the data payload field, the radio frequency sub-board of the base station fills, in order of acquiring one data packet from each linked list each time, the multiple data packets into the data payload field for sending. As long as the multiple data packets belonging to the same terminal are filled into the same linked list, two adjacent data packets sent to the same terminal are separated by several data packets sent to other terminals. The specific number of data packets for separation is determined by the preset number of linked lists. Those skilled in the art may preset the number of linked lists according to actual scenario requirements to maximize efficiency.

With the preceding configurations, it can be ensured that each terminal only receives and processes a new data packet after the terminal completes processing of a received data packet each time. This maximizes the use of the time when the terminal processes the data, optimizes the communication efficiency, and provides a more efficient solution for a scenario that requires frequent communication, such as an Internet of Things communication scenario.

In addition, the reason why the multiple data packets in the same group are arranged adjacent to each other is that the data packets directed to the same data packet group (directed to each terminal in the same small group) are sent in a concentrated period of time, for example, one communication period interval. In this case, terminals in all the small groups corresponding to this data packet group may enter a sleep state to reduce power consumption.

In addition, the reason why the filling lengths of the multiple linked lists are evenly set is to minimize the maximum sending time of the data packet and improve the communication efficiency.

Correspondingly, in an optional implementation of this embodiment, the step in which the multiple data packets are acquired in sequence according to the sorting result, and the multiple data packets of the multiple terminals are filled into the multiple linked lists in the manner that the multiple data packets belonging to the same terminal are filled in the same linked list, the multiple data packets in the same group are arranged adjacent to each other, and the filling lengths of the multiple linked lists are evenly set may include the steps described below.

Each data packet group is acquired in sequence according to the result of the first sorting, where the acquisition is performed alternately in descending order and ascending order.

The multiple terminal data packet sets in each data packet group are vertically filled into the multiple linked lists in sequence according to the result of second sorting of each data packet group.

Each terminal data packet set is filled into a current shortest linked list.

With the preceding configurations, the objectives can be achieved that the multiple data packets belonging to the same terminal are filled in the same linked list, the multiple data packets in the same group are arranged adjacent to each other, and the filling lengths of the multiple linked lists are evenly set.

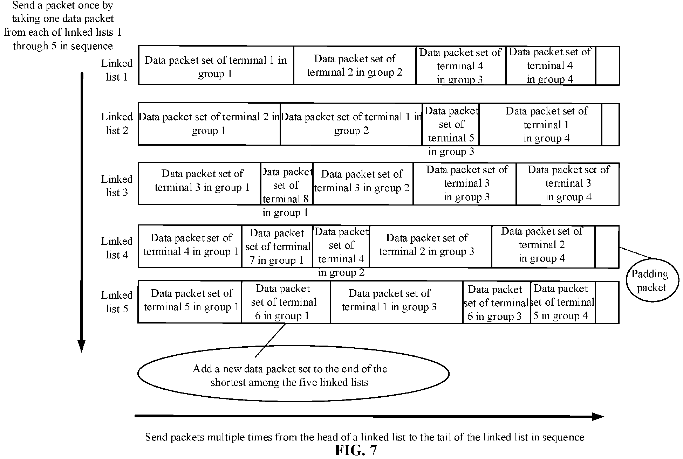

Optionally, FIG. 7 is a schematic diagram showing a linked list structure for packet organization and a packet sending effect of the main control board of the base station to which an embodiment of the present application is applicable. As shown in FIG. 7, in the preceding organization manner with multiple linked lists for the data packets, adjacent data packets in the data payload field are sent to different terminals, respectively. After at least several data packets are sent for separation, the same terminal receives a new data packet again, thereby allowing sufficient time for the terminal to process each data packet. In addition, the multiple small groups including the data packets are sorted in descending order of the numbers of data packets. The formation of the linked list is then performed by acquiring the largest group and the smallest group, the second largest group and the second smallest group, and so on. When being filled into the linked list, all the data packets of the same terminal are placed into the same linked list each time. Each of the data packets is placed into the shortest linked list so that it is ensured that the linked lists have approximately balanced final lengths. This also helps ensure that the number of groups to which all data packets acquired in each time period belong is not excessive, while data packets in each data packet group are sent as continuously as possible.

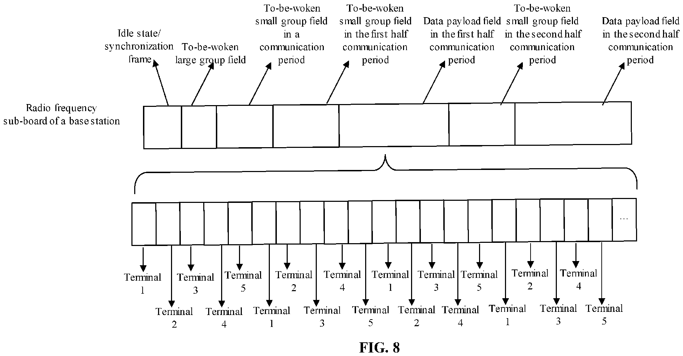

In addition, FIG. 8 is a schematic diagram showing that the data packets of the multiple terminals in the data payload field are sent alternately, where the embodiment of the present application is applicable to the data payload field. As shown in FIG. 8, one packet is taken out from each of the preceding linked lists in sequence and sent so that the objectives are achieved that the data packets directed to different terminals are sent one after another and the data packets directed to the same terminal are sent at a fixed interval of several data packets, so as to obtain optimal efficiency of the air interface.

In the embodiment of the present application, after the main control board of the base station acquires the data packets to be sent, the multiple data packets of the multiple terminals are filled into the multiple linked lists with the objectives that the multiple data packets belonging to the same terminal are filled in the same linked list, the multiple data packets in the same group are arranged adjacent to each other, and the filling lengths of the multiple linked lists are evenly set, so that the radio frequency sub-board of the base station fills, in order of acquiring one data packet from each linked list each time, the multiple data packets into the data payload field for sending. In this implementation manner, the adjacent data packets in the data payload field can be allocated to the different terminals for processing, thereby maximizing the use of the time when the terminal processes the data and optimizing the communication efficiency. In addition, the communication efficiency can be ensured, and the probability of data packet collisions is effectively reduced, allowing the embodiments of the present application to be applicable to various complex communication scenarios. Additionally, the efficiency of the air interface is improved in the flexible linked list formation and data packet sending manner. This real-time adaptive data packet sending manner makes the entire solution more versatile and scalable.

### Embodiment five

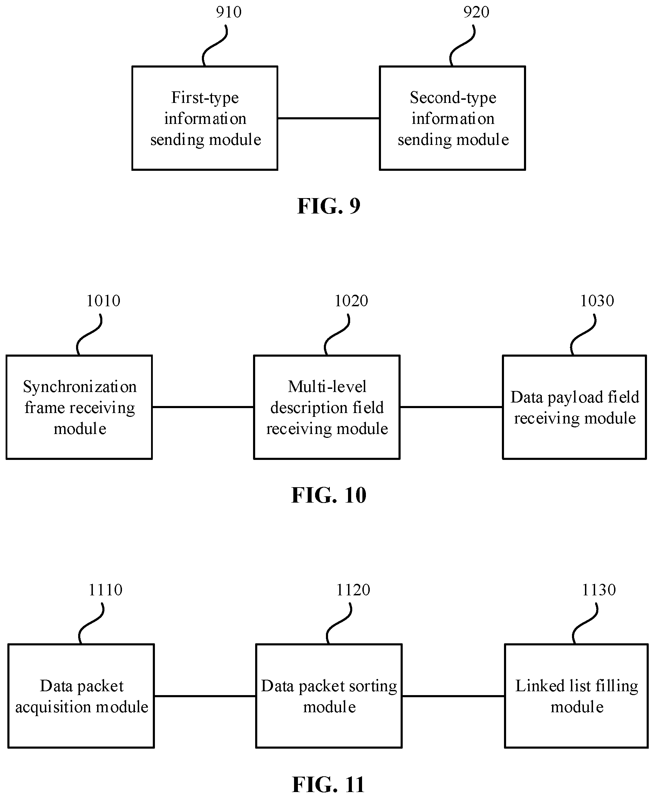

FIG. 9 is a structural diagram of a group communication apparatus according to embodiment five of the present application. The apparatus is configured in a radio frequency sub-board of a base station. As shown in FIG. 9, the apparatus includes a first-type information sending module 910 and a second-type information sending module 920.

The first-type information sending module 910 is configured to send a synchronization frame to a terminal group in a communication period, where the synchronization frame includes indication information indicating whether the communication period is a wake-up packet sending period, the terminal group includes multiple terminals, and the multiple terminals are grouped in a manner of multi-level organization.

The second-type information sending module 920 is configured to send a to-be-woken terminal multi-level description field and a data payload field to the terminal group in the wake-up packet sending period.

The to-be-woken terminal multi-level description field is used for indicating, in a manner of multi-level description, a terminal in the terminal group that needs to be woken up in a current wake-up packet sending period, and the data payload field includes a data packet that needs to be sent to a woken terminal in the current wake-up packet sending period.

In the embodiment of the present application, the radio frequency sub-board of the base station may separately send the synchronization frame, the to-be-woken terminal multi-level description field, and the data payload field to the terminal group in the communication period identified as the wake-up packet sending period so that each terminal in the terminal group receives a data packet directed to the terminal in the data payload field only when identifying, in a multi-level manner, the terminal as the to-be-woken terminal in the communication period according to the to-be-woken terminal multi-level description field. This multi-level wake-up manner significantly reduces wake-up power consumption and improves wake-up efficiency. Each terminal may enter a sleep state in time after communication is completed. The preceding implementation manner achieves a particularly significant energy-saving effect in a large-scale group communication scenario.

Based on the preceding embodiments, the apparatus is configured in multiple radio frequency sub-boards of the base station.

Correspondingly, the first-type information sending module 910 is configured to send the synchronization frame to the terminal group through a first-type radio frequency sub-board of the base station in the communication period.

The second-type information sending module 910 is configured to send the to-be-woken terminal multi-level description field and the data payload field to the terminal group through a second-type radio frequency sub-board of the base station in the wake-up packet sending period.

Based on the preceding embodiments, the to-be-woken terminal multi-level description field includes:
a to-be-woken large group description field and a to-be-woken small group to-be-woken terminal description field.

Based on the preceding embodiments, the to-be-woken small group to-be-woken terminal description field includes:
a complete to-be-woken small group to-be-woken terminal description field corresponding to the complete communication period, and interval to-be-woken small group to-be-woken terminal description fields that correspond to the multiple communication period intervals, respectively.

The number of data payload fields matches the number of the communication period intervals, and an interval to-be-woken small group to-be-woken terminal description field and a data payload field are separately included in each communication period interval.

The embodiment of the present application provides the group communication apparatus configured in the radio frequency sub-board of the base station.

The group communication apparatus may perform the group communication method performed by the radio frequency sub-board of the base station provided in any embodiment of the present application and has function modules and beneficial effects corresponding to the method performed.

### Embodiment six

FIG. 10 is a structural diagram of a group communication apparatus according to embodiment six of the present application. The apparatus is configured in a terminal in a terminal group. As shown in FIG. 10, the apparatus includes a synchronization frame receiving module 1010, a multi-level description field receiving module 1020, and a data payload field receiving module 1030.

The synchronization frame receiving module 1010 is configured to receive, in a communication period, a synchronization frame sent by a radio frequency sub-board of a base station.

The multi-level description field receiving module 1020 is configured to, in response to identifying the communication period as a wake-up packet sending period according to the synchronization frame, continue to receive, in the communication period, a to-be-woken terminal multi-level description field sent by the radio frequency sub-board of the base station.

The data payload field receiving module 1030 is configured to, in response to determining, according to the to-be-woken terminal multi-level description field, that the terminal is the to-be-woken terminal in the communication period, continue to receive, in the communication period, a data payload field sent by the radio frequency sub-board of the base station and extract a data packet directed to the terminal from the data payload field.

Each terminal in the terminal group in the embodiment of the present application receives the data packet directed to the terminal in the data payload field only when identifying, in a multi-level manner, the terminal as the to-be-woken terminal in the communication period according to the to-be-woken terminal multi-level description field sent by the radio frequency sub-board of the base station. This multi-level wake-up manner significantly reduces wake-up power consumption and improves wake-up efficiency. Each terminal may enter a sleep state in time after communication is completed. The preceding implementation manner achieves a particularly significant energy-saving effect in a large-scale group communication scenario.

Based on the preceding embodiments, the data payload field receiving module 1030 may include a first receiving unit and a second receiving unit.

The first receiving unit is configured to, in response to determining that a to-be-woken large group description field includes:
an identifier of the large group to which the terminal belongs, continue to receive a to-be-woken small group to-be-woken terminal description field in the to-be-woken terminal multi-level description field when the to-be-woken large group description field in the to-be-woken terminal multi-level description field is received.

The second receiving unit is configured to:
in response to determining that the to-be-woken small group to-be-woken terminal description field includes an identifier of the small group to which the terminal belongs and the identifier of the terminal corresponding to the identifier of the small group to which the terminal belongs, continue to receive, in the communication period, the data payload field sent by the radio frequency sub-board of the base station.

Based on the preceding embodiments, the first receiving unit is configured to continue to receive a description field of a to-be-woken terminal in the complete wake-up small group in the to-be-woken terminal multi-level description field.

Correspondingly, the second receiving unit is configured to: in response to determining that the complete to-be-woken small group to-be-woken terminal description field includes the identifier of the small group to which the terminal belongs and the identifier of the terminal corresponding to the identifier of the small group to which the terminal belongs, continue to receive an interval to-be-woken small group to-be-woken terminal description field corresponding to each communication period interval in the to-be-woken terminal multi-level description field;
and in response to determining, according to an interval to-be-woken small group to-be-woken terminal description field corresponding to a current communication period interval, that the terminal is the to-be-woken terminal in the current communication period interval, continue to receive a data payload field corresponding to the current communication period interval.

The embodiment of the present application provides the group communication apparatus configured in the terminal in the terminal group, and the group communication apparatus may perform the group communication method performed by the terminal in the terminal group provided in any embodiment of the present application and has function modules and beneficial effects corresponding to the method performed.

### Embodiment seven

FIG. 11 is a structural diagram of a group communication apparatus according to embodiment seven of the present application. The apparatus is configured in a main control board of a base station. As shown in FIG. 11, the apparatus includes a data packet acquisition module 1110, a data packet sorting module 1120, and a linked list filling module 1130.

The data packet acquisition module 1110 is configured to acquire multiple data packets to be sent to multiple terminals in a terminal group.

The data packet sorting module 1120 is configured to group the multiple data packets of the multiple terminals in a manner of multi-level organization of the terminal group and sort multiple data packet groups and multiple data packets in each data packet group in a preset sorting manner.

The linked list filling module 1130 is configured to acquire the multiple data packets in sequence according to a sorting result and fill the multiple data packets of the multiple terminals into multiple linked lists in a manner that multiple data packets belonging to the same terminal are filled in the same linked list, multiple data packets in the same group are arranged adjacent to each other, and the filling lengths of the multiple linked lists are evenly set.

A radio frequency sub-board of the base station fills, in order of acquiring one data packet from each linked list each time, the multiple data packets of the multiple terminals into a data payload field for sending.

In the embodiment of the present application, after the main control board of the base station acquires the data packets to be sent, the multiple data packets of the multiple terminals are filled into the multiple linked lists with the objectives that the multiple data packets belonging to the same terminal are filled in the same linked list, the multiple data packets in the same group are arranged adjacent to each other, and the filling lengths of the multiple linked lists are evenly set, so that the radio frequency sub-board of the base station fills, in order of acquiring one data packet from each linked list each time, the multiple data packets into the data payload field for sending. In this implementation manner, adjacent data packets in the data payload field can be allocated to different terminals for processing, thereby maximizing the use of the time when the terminal processes the data and optimizing communication efficiency. In addition, the communication efficiency can be ensured, and the probability of data packet collisions is effectively reduced, allowing the embodiments of the present application to be applicable to various complex communication scenarios.

Based on the preceding embodiments, the data packet sorting module 1120 is configured to:
generate a data packet group corresponding to each small group according to small groups to which terminals directed to by the multiple data packets of the multiple terminals belong; collect multiple data packets corresponding to the same terminal in each small group into the same terminal data packet set;
and perform first sorting on the multiple data packet groups in descending order of the number of data packets included by each of the multiple data packet groups,
and perform second sorting on multiple terminal data packet sets in each data packet group in descending order of the number of data packets in each of the multiple terminal data packet sets.

Based on the preceding embodiments, the linked list filling module 1130 is configured to:
acquire each data packet group in sequence according to the result of the first sorting, where the acquisition is performed alternately in descending order and ascending order;
and vertically fill the multiple terminal data packet sets in each data packet group into the multiple linked lists in sequence according to the result of the second sorting of each data packet group.

Each terminal data packet set is filled into a current shortest linked list.

The embodiment of the present application provides the group communication apparatus configured in the main control board of the base station, and the group communication apparatus may perform the group communication method performed by the main control board of the base station provided in any embodiment of the present application and has function modules and beneficial effects corresponding to the method performed.

### Embodiment eight

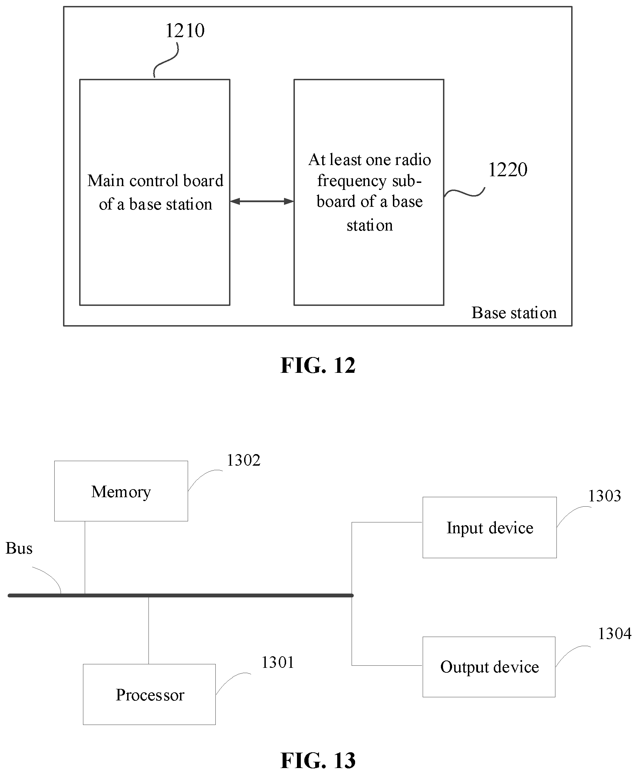

FIG. 12 is a structural diagram of a base station according to embodiment eight of the present application. As shown in FIG. 12, the base station includes:
a main control board 1210 of the base station and at least one radio frequency sub-board 1220 of the base station.

The at least one radio frequency sub-board 1220 of the base station is configured to implement the group communication method performed by the radio frequency sub-board of the base station according to any embodiment of the present application.

The main control board of the base station is configured to implement the group communication method performed by the main control board of the base station according to any embodiment of the present application.

Optionally, the at least one radio frequency sub-board 1220 of the base station may include one first-type radio frequency sub-board of the base station and at least one second-type radio frequency sub-board of the base station.

### Embodiment nine

FIG. 13 is a structural diagram of a terminal according to embodiment nine of the present application. The terminal may be various devices with low power consumption, for example, an electronic price tag. Components, their connections and relationships, and their functions, as shown herein, serve as examples only.

As shown in FIG. 13, the terminal includes one or more processors 1301, a memory 1302, and interfaces for connecting various components, including a high-speed interface and a low-speed interface. The various components are interconnected to each other by different buses and may be mounted on a common mainboard or in other manners as desired. The processor may process instructions executed in the terminal, including instructions stored in or on the memory to make graphic information of a graphical user interface (GUI) displayed on an external input/output apparatus such as a display device coupled to an interface. In other embodiments, if required, multiple processors and/or multiple buses may be used with multiple memories. In FIG. 13, one processor 1301 is used as an example.

The memory 1302 is a non-transitory computer-readable storage medium provided in the present application. The memory stores instructions executable by at least one processor to cause the at least one processor to perform the group communication method performed by the terminal provided in the present application. The non-transitory computer-readable storage medium of the present application stores computer instructions for causing a computer to perform the group communication method performed by the terminal provided in the present application.

The memory 1302 as the non-transitory computer-readable storage medium may be configured to store a non-transitory software program, a non-transitory computer-executable program, and modules, for example, program instructions/modules (for example, the synchronization frame receiving module 1010, the multi-level description field receiving module 1020, and the data payload field receiving module 1030 shown in FIG. 10) corresponding to the group communication method performed by the terminal in the embodiments of the present application. The processor 1301 runs non-transitory software programs, instructions, and modules stored in the memory 1302 to execute the various function applications and data processing, that is, implement the group communication method performed by the terminal in the preceding method embodiments.

The memory 1302 may include a program storage region and a data storage region. The program storage region may store an operating system and at least one application required for functions. The data storage region may store data and the like created according to the use of the terminal performing the group communication method. Additionally, the memory 502 may include a high-speed random-access memory and a non-transitory memory, for example, at least one magnetic disk storage device, a flash device, or another non-transitory solid-state storage device. In some embodiments, the memory 1302 optionally includes memories which are remotely disposed relative to the processor 1301, and these remote memories may be connected, via a network, to the terminal performing the group communication method. Examples of the preceding network include the Internet, an intranet, a local area network, a mobile communication network, and a combination thereof.

The terminal performing the group communication method may further include an input device 1303 and an output device 1304. The processor 1301, the memory 1302, the input device 1303, and the output device 1304 may be connected by a bus or in other manners. FIG. 13 uses a connection by a bus as an example.

The input device 1303 may receive inputted number or character information and key signal input related to user settings and function control of the terminal performing the group communication method. The input device 1303 may be, for example, a touchscreen, a keypad, a mouse, a trackpad, a touchpad, a pointing stick, one or more mouse buttons, a trackball, or a joystick. The output device 1304 may be, for example, a display device, an auxiliary lighting device (for example, a light-emitting diode (LED)), or a haptic feedback device (for example, a vibration motor). The display device may include a liquid-crystal display (LCD), an LED display, or a plasma display. In some embodiments, the display device may be a touchscreen.

The various embodiments of the systems and techniques described herein may be implemented in digital electronic circuitry, integrated circuitry, an application-specific integrated circuit (ASIC), computer hardware, firmware, software, and/or a combination thereof. The various embodiments may include implementations in one or more computer programs. The one or more computer programs are executable and/or interpretable on a programmable system including at least one programmable processor. The programmable processor may be a dedicated or general-purpose programmable processor for receiving data and instructions from a memory system, at least one input device, and at least one output device and transmitting the data and instructions to the memory system, the at least one input device, and the at least one output device.

These computing programs (also referred to as programs, software, software applications, or codes) include machine instructions of a programmable processor. These computing programs may be implemented in a high-level procedural and/or object-oriented programming language and/or in an assembly/machine language. As used herein, the term "machine-readable medium" or "computer-readable medium" refers to any computer program product, device, and/or apparatus (for example, a magnetic disk, an optical disk, a memory, or a programmable logic device (PLD)) for providing machine instructions and/or data for a programmable processor, including a machine-readable medium for receiving machine instructions as machine-readable signals. The term "machine-readable signal" refers to any signal used in providing machine instructions and/or data for a programmable processor.

In order that interaction with a user is provided, the systems and techniques described herein may be implemented on a computer. The computer has a display device for displaying information to the user, such as a cathode ray tube (CRT) or an LCD monitor, and a keyboard and a pointing device such as a mouse or a trackball through which the user may provide input to the computer. Other types of devices may also be used for providing the interaction with the user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including back-end components (for example, as a data server), or a computing system including middleware components (for example, an application server), or a computing system including front-end components (for example, a user computer with a graphical user interface or a web browser through which the user may interact with the embodiments of the systems and techniques described herein), or a computing system including any combination of such back-end components, middleware components, or front-end components. The system components may be connected to each other through any form or medium of digital data communication (for example, a communication network). Examples of the communication network include a local area network (LAN), a wide area network (WAN), and the Internet.

The computer system may include a client and a server. The client and server are generally remote from each other and typically interact through a communication network. The relationship between the client and the server is generated by computer programs that run on the corresponding computer and have a client-server relationship with each other.

### Embodiment ten

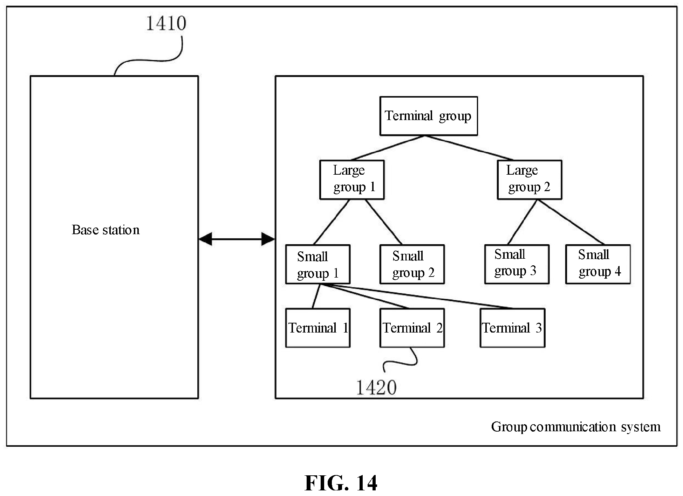

FIG. 14 is a structural diagram of a group communication system according to embodiment ten of the present application. As shown in FIG. 14, the group communication system includes a base station 1410 according to any embodiment of the present application and multiple terminals 1420 according to any embodiment of the present application. The terminals 1420 are grouped in a manner of multi-level organization so that a terminal group is obtained. A terminal group in the form of a two-level organization is shown in FIG. 14.

In the context of the present application, a computer-readable storage medium may be a tangible medium that may contain or store a computer program that is used by or in conjunction with a system, apparatus, or device that executes instructions. The computer-readable storage medium may include an electronic, magnetic, optical, electromagnetic, infrared, or semiconductor system, apparatus, or device, or any suitable combination thereof. Optionally, the computer-readable storage medium may be a machine-readable signal medium. The machine-readable storage medium may include an electrical connection based on one or more wires, a portable computer disk, a hard disk, a random-access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination thereof.

In order that interaction with a user is provided, the systems and techniques described herein may be implemented on a terminal. The terminal has a display device for displaying information to the user, such as a CRT or an LCD monitor, and a keyboard and a pointing device such as a mouse or a trackball through which the user may provide input to the terminal. Other types of devices may also be used for providing the interaction with the user. For example, feedback provided for the user may be sensory feedback in any form (for example, visual feedback, auditory feedback, or haptic feedback). Moreover, input from the user may be received in any form (including acoustic input, voice input, or haptic input).

In the embodiments of the present application, the radio frequency sub-board of the base station may send the synchronization frame, the to-be-woken terminal multi-level description field, and the data payload field to the terminal group in the communication period identified as the wake-up packet sending period so that each terminal in the terminal group continues to receive, in the current wake-up packet sending period, the data packet directed to the terminal in the data payload field only when identifying, in a multi-level manner, the terminal as the to-be-woken terminal in the communication period according to the to-be-woken terminal multi-level description field received in the current wake-up packet sending period. Thus, it is possible to simultaneously complete both terminal wake-up and data packet receiving in the same communication period, thereby significantly reducing communication complexity, achieving high communication efficiency, and reducing the power consumption. In addition, this multi-level wake-up manner significantly reduces the wake-up power consumption and improves the wake-up efficiency. Each terminal may enter the sleep state in time after the communication is completed. The preceding implementation manner achieves the particularly significant energy-saving effect in the large-scale group communication scenario. In addition, after the main control board of the base station acquires the data packets to be sent, the multiple data packets are filled into the multiple linked lists with the objectives that the multiple data packets belonging to the same terminal are filled in the same linked list, the multiple data packets in the same group are arranged adjacent to each other, and the filling lengths of the multiple linked lists are evenly set, so that the radio frequency sub-board of the base station fills, in order of acquiring one data packet from each linked list each time, the multiple data packets into the data payload field for sending. In this implementation manner, the adjacent data packets in the data payload field can be allocated to the different terminals for processing, thereby maximizing the use of the time when the terminal processes the data and optimizing the communication efficiency. In addition, the communication efficiency can be ensured, and the probability of data packet collisions is effectively reduced, allowing the embodiments of the present application to be applicable to various complex communication scenarios.

## Claims

1. A group communication method, the method being performed by a radio frequency sub-board of a base station and comprising:
sending a synchronization frame to a terminal group in a communication period, wherein the synchronization frame comprises indication information indicating whether the communication period is a wake-up packet sending period, the terminal group comprises a plurality of terminals, and the plurality of terminals are grouped in a manner of multi-level organization; and
sending a to-be-woken terminal multi-level description field and a data payload field to the terminal group in the wake-up packet sending period;
wherein the to-be-woken terminal multi-level description field is used for indicating, in a manner of multi-level description, a terminal in the terminal group that needs to be woken up in a current wake-up packet sending period, and the data payload field comprises a data packet that needs to be sent to a woken terminal in the current wake-up packet sending period.

2. The group communication method according to claim 1, wherein
sending the synchronization frame to the terminal group in the communication period comprises:
sending the synchronization frame to the terminal group through a first-type radio frequency sub-board of the base station in the communication period; and
sending the to-be-woken terminal multi-level description field and the data payload field to the terminal group in the wake-up packet sending period comprises:
sending the to-be-woken terminal multi-level description field and the data payload field to the terminal group through a second-type radio frequency sub-board of the base station in the wake-up packet sending period.

3. The group communication method according to claim 1, wherein the to-be-woken terminal multi-level description field comprises a to-be-woken large group description field and a to-be-woken small group to-be-woken terminal description field.

4. The group communication method according to claim 3, wherein the to-be-woken small group to-be-woken terminal description field comprises:
a complete to-be-woken small group to-be-woken terminal description field corresponding to a complete communication period, and interval to-be-woken small group to-be-woken terminal description fields that correspond to a plurality of communication period intervals, respectively, wherein a number of data payload fields matches a number of the plurality of communication period intervals, and an interval to-be-woken small group to-be-woken terminal description field and a data payload field are separately comprised in each communication period interval of the plurality of communication period intervals.

5. A group communication method performed by a terminal in a terminal group, wherein a plurality of terminals in the terminal group are grouped in a manner of multi-level organization, and the method comprises:
receiving, in a communication period, a synchronization frame sent by a radio frequency sub-board of a base station;
in response to identifying the communication period as a wake-up packet sending period according to the synchronization frame, continuing to receive, in the communication period, a to-be-woken terminal multi-level description field sent by the radio frequency sub-board of the base station; and
in response to determining, according to the to-be-woken terminal multi-level description field, that the terminal is the to-be-woken terminal in the communication period, continuing to receive, in the communication period, a data payload field sent by the radio frequency sub-board of the base station, and extracting a data packet directed to the terminal from the data payload field.

6. The group communication method according to claim 5, wherein in response to determining, according to the to-be-woken terminal multi-level description field, that the terminal is the to-be-woken terminal in the communication period, continuing to receive, in the communication period, the data payload field sent by the radio frequency sub-board of the base station comprises:
in response to receiving a to-be-woken large group description field in the to-be-woken terminal multi-level description field and determining that the to-be-woken large group description field comprises an identifier of a large group to which the terminal belongs, continuing to receive a to-be-woken small group to-be-woken terminal description field in the to-be-woken terminal multi-level description field; and
in response to determining that the to-be-woken small group to-be-woken terminal description field comprises an identifier of a small group to which the terminal belongs and an identifier of the terminal corresponding to the identifier of the small group to which the terminal belongs, continuing to receive, in the communication period, the data payload field sent by the radio frequency sub-board of the base station.

7. The group communication method according to claim 6, wherein continuing to receive the to-be-woken small group to-be-woken terminal description field in the to-be-woken terminal multi-level description field comprises:
continuing to receive a complete to-be-woken small group to-be-woken terminal description field in the to-be-woken terminal multi-level description field; and
in response to determining that the to-be-woken small group to-be-woken terminal description field comprises the identifier of the small group to which the terminal belongs and the identifier of the terminal corresponding to the identifier of the small group to which the terminal belongs, continuing to receive, in the communication period, the data payload field sent by the radio frequency sub-board of the base station comprises:
in response to determining that the complete to-be-woken small group to-be-woken terminal description field comprises the identifier of the small group to which the terminal belongs and the identifier of the terminal corresponding to the identifier of the small group to which the terminal belongs, continuing to receive an interval to-be-woken small group to-be-woken terminal description field corresponding to each communication period interval in the to-be-woken terminal multi-level description field; and
in response to determining, according to an interval to-be-woken small group to-be-woken terminal description field corresponding to a current communication period interval, that the terminal is the to-be-woken terminal in the current communication period interval, continuing to receive a data payload field corresponding to the current communication period interval.

8. A group communication method, the method being performed by a main control board of a base station and comprising:
acquiring a plurality of data packets to be sent to a plurality of terminals in a terminal group;
grouping the plurality of data packets of the plurality of terminals in a manner of multi-level organization of the terminal group, and sorting a plurality of data packet groups and a plurality of data packets in each data packet group of the plurality of data packet groups in a preset sorting manner; and
acquiring the plurality of data packets in sequence according to a sorting result, and filling the plurality of data packets of the plurality of terminals into a plurality of linked lists in a manner that a plurality of data packets belonging to a same terminal are filled in a same linked list, a plurality of data packets in a same group are arranged adjacent to each other, and filling lengths of the plurality of linked lists are evenly set;
wherein a radio frequency sub-board of the base station fills, in order of acquiring one data packet from each linked list each time, the plurality of data packets of the plurality of terminals into a data payload field for sending.

9. The group communication method according to claim 8, wherein grouping the plurality of data packets of the plurality of terminals in the manner of multi-level organization of the terminal group, and sorting the plurality of data packet groups and the plurality of data packets in each data packet group of the plurality of data packet groups in the preset sorting manner comprises:
generating a data packet group corresponding to each small group according to small groups to which terminals directed to by the plurality of data packets of the plurality of terminals belong;
collecting a plurality of data packets corresponding to a same terminal in each data packet group into a same terminal data packet set; and
performing first sorting on the plurality of data packet groups in descending order of the number of data packets comprised by each of the plurality of data packet groups, and performing second sorting on a plurality of terminal data packet sets in each data packet group of the plurality of data packet groups in descending order of the number of data packets in each of the plurality of terminal data packet sets.

10. The group communication method according to claim 9, wherein acquiring the plurality of data packets in sequence according to the sorting result, and filling the plurality of data packets of the plurality of terminals into the plurality of linked lists with in a manner that the plurality of data packets belonging to the same terminal are filled in the same linked list, the plurality of data packets in the same group are arranged adjacent to each other, and the filling lengths of the plurality of linked lists are evenly set comprises:
acquiring each data packet group in sequence according to a result of the first sorting, wherein the acquisition is performed alternately in descending order and ascending order; and
vertically filling the plurality of terminal data packet sets in each data packet group into the plurality of linked lists in sequence according to a result of second sorting of each data packet group;
wherein each terminal data packet set of the plurality of terminal data packet sets is filled into a current shortest linked list.

11. A group communication apparatus, configured in a radio frequency sub-board of a base station and comprising:
a first-type information sending module configured to send a synchronization frame to a terminal group in a communication period, wherein the synchronization frame comprises indication information indicating whether the communication period is a wake-up packet sending period, the terminal group comprises a plurality of terminals, and the plurality of terminals are grouped in a manner of multi-level organization; and
a second-type information sending module configured to send a to-be-woken terminal multi-level description field and a data payload field to the terminal group in the wake-up packet sending period;
wherein the to-be-woken terminal multi-level description field is used for indicating, in a manner of multi-level description, a terminal in the terminal group that needs to be woken up in a current wake-up packet sending period, and the data payload field comprises a data packet that needs to be sent to a woken terminal in the current wake-up packet sending period.

12. A group communication apparatus, configured in a terminal in a terminal group, wherein a plurality of terminals in the terminal group are grouped in a manner of multi-level organization, and the apparatus comprises:
a synchronization frame receiving module configured to receive, in a communication period, a synchronization frame sent by a radio frequency sub-board of a base station;
a multi-level description field receiving module configured to, in response to identifying the communication period as a wake-up packet sending period according to the synchronization frame, continue to receive, in the communication period, a to-be-woken terminal multi-level description field sent by the radio frequency sub-board of the base station; and
a data payload field receiving module configured to, in response to determining, according to the to-be-woken terminal multi-level description field, that the terminal is the to-be-woken terminal in the communication period, continue to receive, in the communication period, a data payload field sent by the radio frequency sub-board of the base station and extract a data packet directed to the terminal from the data payload field.

13. A group communication apparatus, configured in a main control board of a base station and comprising:
a data packet acquisition module configured to acquire a plurality of data packets to be sent to a plurality of terminals in a terminal group;
a data packet sorting module configured to group the plurality of data packets of the plurality of terminals in a manner of multi-level organization of the terminal group and sort a plurality of data packet groups and a plurality of data packets in each data packet group of the plurality of data packet groups in a preset sorting manner; and
a linked list filling module configured to acquire the plurality of data packets in sequence according to a sorting result and fill the plurality of data packets of the plurality of terminals into a plurality of linked lists in a manner that a plurality of data packets belonging to a same terminal are filled in a same linked list, a plurality of data packets in a same group are arranged adjacent to each other, and filling lengths of the plurality of linked lists are evenly set;
wherein a radio frequency sub-board of the base station fills, in order of acquiring one data packet from each linked list each time, the plurality of data packets of the plurality of terminals into a data payload field for sending.

14. A base station, comprising a main control board and at least one radio frequency sub-board;
wherein the at least one radio frequency sub-board is configured to implement the group communication method according to any one of claims 1 to 4; and
the main control board is configured to implement the group communication method according to any one of claims 8 to 10.

15. A terminal, comprising:
at least one processor; and
a memory communicatively connected to the at least one processor;
wherein the memory stores a computer program executable by the at least one processor, and the computer program is executed by the at least one processor, so as to enable the at least one processor to perform the group communication method according to any one of claims 5 to 7.

16. A group communication system, comprising the base station according to claim 14 and a terminal group obtained by grouping a plurality of terminals according to claim 15 in a manner of multi-level organization.

17. A computer-readable storage medium storing a computer instruction, wherein the computer instruction is configured to cause a processor to implement the group communication method according to any one of claims 1 to 10 when executed by the processor.
